# EUROPEAN PATENT SPECIFICATION

(11) **EP 2 165 944 B1**
(45) Date of publication and mention of the grant of the patent: **06.08.2014**
(21) Application number: 07788598.6
(22) Date of filing: 13.06.2007
(51) Int. Cl.: B65D 85/804, A47J 31/44, A47J 31/043

(54) **DOSE HOLDER BOWL AND DOSE CONTAINER FOR COFFEE MAKERS**
PORTIONSAUFNAHMESCHÜSSEL UND PORTIONSKAPSEL FÜR KAFFEEMASCHINEN
CUVETTE PORTE-DOSETTE ET DOSETTE POUR MACHINE À CAFÉ

(43) Date of publication of application: 24.03.2010
(73) Proprietor: UCC COFFEE SPAIN, S.L.U., 26006 Logroño (La Rioja) (ES)
(72) Inventor: FLORES, ARNAIZ, Guillermo, E-26006 Logrono (La Rioja) (ES)
(74) Representative: Ungria López, Javier
(86) International application number: PCT/ES2007/000350
(87) International publication number: WO 2008/152153

(56) References cited:
- EP-A1- 0 631 948
- EP-A1- 0 838 186
- EP-A1- 1 726 536
- WO-A1-2006/043102
- ES-A1- 2 229 828
- ES-T3- 2 115 914
- ES-T3- 2 135 172
- ES-U- 1 029 208

## Description

### OBJECT OF THE INVENTION

The present invention relates to a bowl of the kind intended to receive one, two or three containers of doses of coffee, for coffee makers of the type commonly known as "mocca" and containers for that effect.

The object of the invention is to achieve a bowl adaptable to any format of coffee maker of the stated type, avoiding pressures that could generate breakages in the structure thereof, all this with an ease of use, cleaning and replenishment, along with the dose used therein which accords with a series of specific characteristics in terms of grammage and granulometry.

### BACKGROUND OF THE INVENTION

Conventional dose-holder bowls for coffee consist of a receptacle with a cylindrical sector accounting for the majority of the structure, endowed with a perimetric flange in its mouth, this cylindrical sector being extended below to a tronco-conical sector ending in a coaxial tube/plunger which is extended as far as the bottom of the water chamber of the coffee maker, the mouth of which perfectly fits the bowl in order to avoid pressure leaks and which has a separating grille fitted in the zone where its cylindrical sector meets its conical sector.

When the water reaches a suitable level of temperature and pressure in the lower chamber, due to the effect of the heating plate, the steam rises up the tube/plunger and through the grille if order to reach the mass of ground coffee occupying the cylindrical sector of the bowl, producing the dispensing of the coffee which rises up to the upper part of the coffee maker, for its consumption.

In order to achieve the proper functioning of the coffee maker there exist two solutions, a mechanical system inserted in the dose-holder bowl of the coffee maker, based on a spring which exerts an uncontrolled pressure on the dose and against the upper body of the coffee maker, and a second solution consisting of a plastic coupling, with a rubber ring fitting, in the upper body of the coffee maker, which forces the existence of a pressure of the dose against the dose-holder bowl of the coffee maker. A clear example of these solutions are disclosed by EP0838186A1, where it is additionally comprised a commonly known bowl which comprises a tube/plunger emerging from its low tronco-conical part as far as close to the bottom of the water chamber of the coffee maker.

Independently of the fact that both one solution and the other are developed solely for a two-cup format of coffee maker, they force "unnatural" pressures that prevent the optimum dispensing of the coffee, they are difficult to take apart and complicated to clean, and they also do not contain standardised elements, in other worlds, elements that are valid for any coffee maker, and which instead are different for each type of device, making it difficult to replace them and affect the use of the coffee maker.

In terms of the containers of doses of coffee existing on the market, these are known as espresso type containers of doses and Senseo type containers of doses.

Espresso containers of doses of coffee consist of compact tablets, hard to the touch, intended specifically for espresso machines, habitually of the professional type though we can now find coffee makers on the market that are for domestic use. These containers of doses are made of cellulose and inside the coffee is very finely ground for the adequate obtaining of espresso coffee. For a correct functioning there is a special bowl that has to be adapted to the holder of the coffee maker or they have to have a special system known as E.S.E. pod.. The functioning of an espresso machine impels the water at approximately 9 bars, impregnating the tablet, dragging along the substances and at the same time producing the cream. The usual thing in these doses is to have a grammage of 7 grams for one dose of coffee, and of 14 grams for two doses of coffee.

The Senseo container of a dose of coffee is, like the previous one, made of cellulose, it is soft to the touch and contains a medium ground coffee. In this case the coffee that is obtained is semi-espresso.

### DESCRIPTION OF THE INVENTION

The dose-holder bowl that the invention proposes has been conceived and structured in order to provide a fully satisfactory solution to the problem stated above, in the different aspects commented on.

To achieve this, more specifically and in accordance with one of the characteristics of the invention, the bowl passes directly from the cylindrical sector to the tube/plunger, with the tronco-conical sector being absent, in such a way that the base of the holder is flat, being furthermore attached to its side wall via a markedly rounded edge, in a manner analogous to how this is done with the tube/plunger.

In accordance with another characteristic of the invention, the bowl lack the separating grille, first of all because there does not exist a zone of separation between a cylindrical section and a tronco-conical section of the bowl, due to the fact that the latter does not exist, and in second place because the ground coffee is not added loose to the corresponding holder defined in the bowl but is instead added packaged in containers of filter paper which, with along their own contents, adopt a discoid configuration, of diameter that matches that of the holder in the bowl and with a curvature in its border that in turn coincides with that which connects the side wall with the bottom of said holder, while its axial height coincides with that of the holder, or is half that of the latter or is a third thereof, depending on whether the bowl is intended for one container of a dose of coffee, two containers or three containers, since the depth thereof will depend on the number of the containers of doses of coffee.

For a correct functioning of the bowl in the cellulose container, it is fundamental that the dose is semi-compact, since this type of coffee maker has very little pressure and could cause an overpressure with the consequent blowing of the safety valve for the coffee maker. More specifically, the grammage for each dose has to lie between 12 and 14 grams, depending on the coffee used in the mixed (natural/roasted), and the grinding has to be intermediate, since too fine a grinding prevents the water from being able to exit through the coffee and if it is too coarse the coffee turns out watery. In any case, the extraction has to be complete and the dose has to be wetted around its entire periphery as well as in the central zone. In terms of the granulometry of the dose, this varies depending on the particles, so for particles smaller than 200 microns it will be between 15 and 30%, for particles between 200 and 400 microns between 20 and 40%, for particles between 400 and 800 microns between 15 and 40%, and for particles larger than 800 microns it will be less than 5%.

### DESCRIPTION OF THE DESIGNS

In order to complement the description that is being made, and with the aim of aiding a better understanding of the characteristics of the invention, in accordance with a preferred example of practical embodiment thereof, this description is accompanied by a set of drawings where, on an illustrative rather than limiting basis, the following have been represented.
Figure 1.- Shows, according to a side elevation view in diametric cross-section, a dose-holder bowl for coffee makers embodied according to the object of the present invention, in accordance with a first embodiment for said bowl in which the latter is intended for a container of a dose of coffee.
Figure 2.- Shows a representation similar to that of figure 1, but in which the bowl is duly coupled to a water chamber of a coffee maker and receives within it the container of a dose of coffee.
Figure 3.- Again shows a representation similar to that of figure 1, but according to an embodiment in which the bowl is intended to receive two containers of doses of coffee, the containers for those doses having been represented next to said bowl.
Figure 4.- Finally shows a representation also similar to that of figure 1, but corresponding to a bowl intended to receive three containers of doses of coffee within it.

### PREFERRED EMBODIMENT OF THE INVENTION

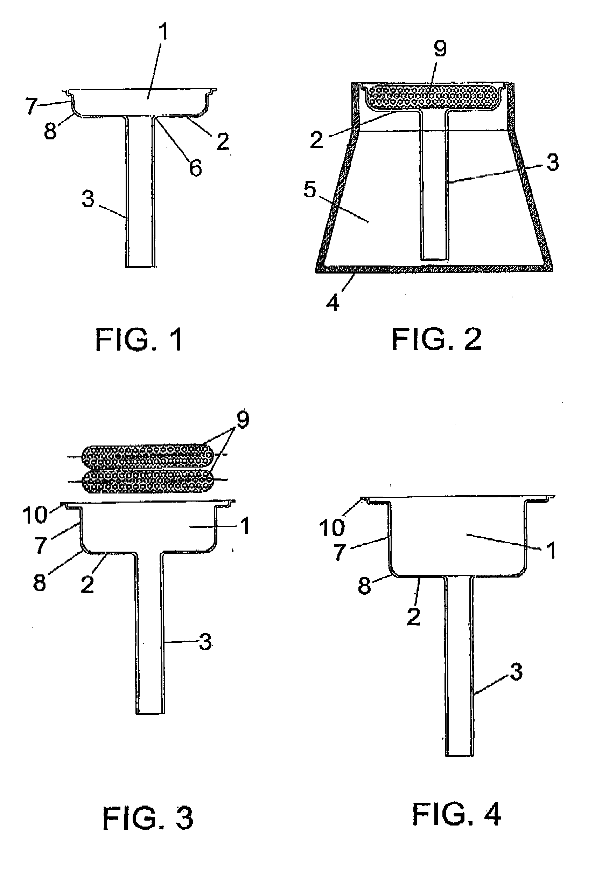

With the stated figures in view and especially that of figure 1, it can be seen how the dose-holder bowl that is advocated is created on the basis of a receptacle or holder (1) for the coffee, which forms a kind of cylindrical well, with a flat bottom (2), from which there emerges axially and downwards a tube/plunger (3) intended to extend as far as close to a bottom (4) of a water chamber (5) of the coffee maker and to form the duct for steam to rise up through when the water reaches the intended conditions of pressure and temperature. The tube/plunger (3) is secured to the bottom (2) of the holder (1) via a rounded edge (6), and the bottom (2) is in turn attached to a side wall (7) of the holder (1) via another edge (8), markedly rounded, in particular rounded in correspondence with the curvature of the perimetric border of a container (9) of a dose of coffee, which adopts a discoid configuration of rounded border, as can be seen specially in figure 2, and whose wall is materialised in a paper filter in order to permit the dispensing of the coffee, as has also been stated earlier.

At the level of its mouth the holder (1) incorporates a doubly staggered widening, ending in a necessary flange (10) for coupling to the mouth of the water chamber (5).

As can be seen from looking at figure 2, the diametric width of the holder (1) coincides with that corresponding to the container (9) of the dose of coffee, but its axial height can be coincident with that of said container (9), specially when the coffee maker is single-dose as in the case of figure 2, and it can be double when it is intended for two containers (9) of doses of coffee, as in the case of figure 3, or it can be triple when the coffee maker is intended for three containers (9) of doses of coffee, as in the case of figure 4.

Specifically, provision has been made so that when the bowl is single-dose, the diameter of the holder (1) is 56.4 mm and its axial height is 12 mm, while in the case of a bowl for two containers (9) of doses of coffee the diameter is 57 mm and the axial height 23 mm, and in the case of a bowl for three containers (9) of doses of coffee the diameter is 57 mm but its axial height is 36 mm.

In any case, the container or containers (9) of the corresponding doses of coffee fit perfectly into the holder (1), ensuring a perfect dispensing of the coffee with results that are optimum both from the point of view of odour and that of flavour.

As has been said above, the container (9) is fundamental for achieving a cup of coffee in optimum conditions. There has to exist an equilibrium between grinding/pressure of the tablet (compaction and grammage). Having a fine grinding means that the water cannot exit and a plug is formed, and a grinding that is too coarse will produce a tea-like or watery coffee. Therefore the optimum grammage for each container (9) has to lie between 12 and 14 grams, in order to achieve optimum results. In terms of the granulometry of the coffee of each container (9), this varies depending on the particles, so for particles smaller than 200 microns it will be between 15 and 30%, for particles between 200 and 400 microns between 20 and 40%, for particles between 400 and 800 microns between 15 and 40%, and for particles larger than 800 microns it will be less than 5%.

## Claims

1. Dose-holder bowl and container of a dose of coffee for coffee makers, especially for "mocca" type coffee makers, in which the bowl is coupled to the mouth of a water heating chamber (5), and includes a tube/plunger (3) emerging from a bottom (2) of a holder (1) and which extends as far as close to a bottom (4) of the chamber (5) and in which a container (9) of a dose of coffee is made of cellulose, **characterized in that** it is created on the basis of the holder (1) of cylindrical configuration and flat bottomed, lacking in a filter-grille, from the centre of which emerges the tube/plunger (3) via a rounded edge (6), and the bottom (2) of the holder (1) is attached to a side wall (7) via a markedly rounded edge (8), being finished on top in a classical perimetric flange (10) for coupling to the mouth of the water heating chamber (5), provision having been made that in said holder (1) for the coffee one or more containers (9) of coffee of semi-compact dose and of intermediate grinding specific for coffee makers of the mocca type have been established, of discoid configuration, with walls materialized in filter paper and of borders rounded by a curvature that coincides with the markedly rounded edge (8) where the side wall (7) is attached to the bottom (2) of the holder (1) for the coffee.

2. Dose-holder bowl and container of a dose of coffee for coffee makers, according to claim 1, **characterized in that** the said cylindrical holder (1) presents a diameter that coincides with that of the container (9) for the ground coffee, and an axial height that is equal to, double or triple the axial height of said container (9) of ground coffee, depending on whether the coffee maker is intended for one, two or three containers (9), provision having been made for each dose of coffee to have an optimum grammage lying between 12 and 14 grams, depending on the coffee used, and for the granulometry of the coffee of each dose to vary depending on the particles, so for particles smaller than 200 microns it will be between 15 and 30%, for particles between 200 and 400 microns between 20 and 40%, for particles between 400 and 800 microns between 15 and 40%, and for particles larger than 800 microns it will be less than 5%.

## Patentansprüche

1. Portionsaufnahmeschüssel und Behälter für eine Kaffeeportion für Kaffeemaschinen, insbesondere für "Mokka"-Kaffeemaschinen, wobei die Schüssel mit der Mündung einer Wasserheizkammer (5) verbunden ist und ein Rohr / einen Kolben (3) umfasst, der von einem Boden (2) einer Aufnahme (1) ausgeht und sich so nah wie möglich zu einem Boden (4) der Kammer (5) erstreckt und bei der ein Behälter (9) einer Kaffeeportion aus Zellulose besteht, **dadurch gekennzeichnet, dass** sie auf der Basis der Aufnahme (1) in zylindrischer Konfiguration und mit flachem Boden ohne Filtergitter ausgebildet ist, von dessen Zentrum das Rohr / der Kolben (3) über eine abgerundete Kante (6) ausgeht und der Boden (2) der Aufnahme (1) an einer Seitenwand (7) über eine deutlich abgerundete Kante (8) angebracht ist, abgeschlossen an der Oberseite mit einem klassischen Umfangsflansch (10) für die Verbindung mit der Mündung der Wasserheizkammer (5), wobei vorgesehen ist, dass in der Aufnahme (1) für den Kaffee wenigstens ein scheibenförmiger Behälter (9) für Kaffee einer halbkompakten Portion und mittlerer Mahlung, die für Kaffeemaschinen des Mokkatyps kennzeichnend ist, eingelegt ist, bei dem die Wände aus Filterpapier bestehen und die Ränder mit einer Krümmung abgerundet sind, die mit der deutlich abgerundeten Kante (8) übereinstimmt, wobei die Seitenwand (7) an dem Boden (2) der Aufnahme (1) für den Kaffee angebracht ist.

2. Portionsaufnahmeschüssel und Behälter für eine Kaffeeportion für Kaffeemaschinen nach Anspruch 1, **dadurch gekennzeichnet, dass** die zylindrische Aufnahme (1) einen Durchmesser, der mit jenem des Behälters (9) für den gemahlenen Kaffee übereinstimmt, und eine axiale Höhe aufweist, die gleich der axialen Höhe des Behälters (9) für den gemahlenen Kaffee ist oder das Zweifache oder das Dreifache derselben beträgt, abhängig davon, ob die Kaffeemaschine für einen, zwei oder drei Behälter (9) ausgelegt ist, wobei vorgesehen ist, dass jede Kaffeeportion ein optimales Grammgewicht aufweist, das in Abhängigkeit des verwendeten Kaffees zwischen 12 und 14 Gramm liegt, und die Korngrößenverteilung des Kaffees jeder Portion in Abhängigkeit der Partikel schwankt, so dass sie für Partikel kleiner als 200 µm zwischen 15 und 30%, für Partikel zwischen 200 und 400 µm zwischen 20 und 40% und für Partikel zwischen 400 und 800 µm zwischen 15 und 40% liegt und für Partikel größer als 800 µm kleiner als 5% ist.

## Revendications

1. Coupe porte-dosette et dosette de café pour machines à café, spécialement pour des machines à café du type "mocca", dans lesquelles la coupe est couplée à l'ouverture d'une chambre de chauffage d'eau (5), et inclut un tube/plongeur (3) émergeant d'un fond (2) d'un support (1) et qui s'étend jusqu'à un fond (4) de la chambre (5) et dans laquelle une dosette (9) de café est faite de cellulose, **caractérisée en ce que** la coupe est faite sur la base d'un support de configuration cylindrique et à fond plat, dépourvu de grille de filtre, depuis le centre duquel le tube/plongeur (3) émerge via un bord arrondi (6), et le fond (2) du support (1) est fixé sur une paroi latérale (7) par l'intermédiaire d'un bord arrondi (8) marqué, finissant en haut en un rebord périmétrique classique (10) pour couplage à l'ouverture de la chambre de chauffage d'eau (5), des dispositions ayant été prises pour que dans ledit support (1) pour le café une ou plusieurs dosettes (9) de café de dose semi-compacte et de mouture intermédiaire spécifiques aux machines à café du type mocca ont été placées, de configuration discoïde, avec des parois matérialisées en papier filtre et de rebords arrondis d'une courbure qui coïncide avec le bord arrondi (8) marqué là où la paroi latérale (7) est fixée sur le fond (2) du support (1) pour le café.

2. Coupe porte-dosette et dosette de café pour machines à café, selon la revendication 1, **caractérisées en ce que** ledit support (1) cylindrique présente un diamètre qui coïncide avec celui de la dosette (9) pour le café moulu, et une hauteur axiale qui est égale à, ou double ou triple de la hauteur axiale de ladite dosette (9) de café moulu, selon si la machine à café est prévue pour une, deux ou trois dosettes (9), des dispositions ayant été prises pour que chaque dose de café ait un grammage optimal entre 12 et 14 grammes, selon le café utilisé, et pour que la granulométrie de chaque dose varie en fonction des particules, ainsi pour des particules plus petites que 200 microns elle sera entre 15 et 30%, pour des particules entre 200 et 400 microns entre 20 et 40%, pour des particules entre 400 et 800 microns entre 15 et 40% et pour des particules plus grandes que 800 microns inférieure à 5%.
